# FASCICULE DE BREVET EUROPEEN

(11) **EP 0 462 852 B1**
(45) Date de publication et mention de la délivrance du brevet: **16.08.1995**
(21) Numéro de dépôt: 91401314.9
(22) Date de dépôt: 22.05.1991
(51) Int. Cl.: B01D 17/02, C02F 1/00

(54) **Procédé et dispositif de séparation entre une phase fluide continue et une phase dispersée, et application**
Verfahren und Vorrichtung zum Trennen einer fluiden kontinuierlichen Phase und einer dispersen Phase sowie deren Verwendung
Process and apparatus for the separation of a continuous fluid phase and a disperse phase and their application

(30) Priorité: 18.06.1990 FR 9007622
(43) Date de publication de la demande: 27.12.1991
(73) Titulaire: INSTITUT FRANCAIS DU PETROLE, 92502 Rueil-Malmaison (FR)
(72) Inventeur: Rojey, Alexandre, F-92380 Garches (FR); Collin, Jean-Claude, F-78540 Marsinval-Verneuil (FR); Palermo, Thierry, F-78008 Paris (FR)

(56) Documents cités:
- WO-A-86/05412
- FR-A- 2 177 464
- US-A- 2 300 129
- US-A- 4 376 676
- US-A- 4 855 050

## Description

La présente invention concerne un procédé et un dispositif de séparation entre une phase fluide continue et une phase dispersée notamment fluide.

Le processus de séparation entre une phase fluide continue et une phase fluide dispersée revêt une grande importance industrielle.

A titre d'exemple, on peut citer la séparation entre une phase aqueuse et une phase organique, telle qu'un fluide pétrolier.

Il devient de plus en plus important de disposer d'un procédé efficace de séparation entre deux phases hétérogènes de ce type. En effet, les préoccupations de protection de l'environnement, par exemple, nécessitent de réduire la teneur en hydrocarbures des rejets aqueux à des valeurs très faibles.

Les installations de séparation, telles que celles qui équipent, par exemple, les plate-formes de production de pétrole en mer doivent être en outre de plus en plus compactes et de plus en plus légères pour répondre à des contraintes d'économie et pour permettre la production dans des zones difficiles. Cela est encore plus vrai lorsque ces installations de séparation sont installées entre deux eaux ou au fond de l'eau, notamment dans le cas d'application pétrolière et gazière.

Enfin, il est nécessaire de disposer de procédés et de dispositifs simples et fiables qui nécessitent peu d'entretien et qui peuvent être facilement automatisés.

Il existe de nombreuses techniques pour réaliser une telle séparation.

La technique la plus simple consiste à envoyer le mélange des phases à séparer dans une enceinte dont le volume est calculé de manière à permettre un temps de séjour suffisant pour que l'ensemble des gouttes ou des bulles formant la phase dispersée aient le temps de se rassembler et de coalescer à l'interface de séparation entre les deux phases.

Cette technique qui est très couramment utilisée conduit à des installations très encombrantes.

Une amélioration de cette technique consiste à disposer dans l'enceinte de séparation des plaques parallèles sur lesquelles la phase dispersée coalesce avant de remonter vers l'interface de séparation entre les deux phases.

Une autre technique consiste à placer un garnissage qui favorise la coalescence de la phase dispersée.

Une autre technique dite de flottation, utilisée lorsque la phase dispersée est une phase liquide, consiste à faire remonter les gouttes de la phase dispersée par coalescence en envoyant une dispersion fine de gaz, les gouttelettes à séparer venant se fixer à la surface des bulles.

La séparation entre phases peut être largement améliorée en ayant recours à l'effet d'une accélération centrifuge pour augmenter ou pour remplacer l'effet de la gravité. Ceci peut être réalisé dans une centrifugeuse mécanique mue par un moteur, ce qui permet de réaliser une installation très compacte. Cette solution présente toutefois l'inconvénient d'être plus complexe et moins fiable du fait de la présence du moteur.

L'effet de centrifugation peut être obtenu également dans un dispositif entièrement statique. L'utilisation de cyclones et notamment d'hydrocyclones basés sur un tel principe se développe actuellement en raison des avantages présentés par de tels dispositifs, qui permettent une bonne efficacité de séparation tout en étant de type statique.

Le document US-A-2.300.129 décrit un dispositif permettant de séparer des liquides ayant des densités différentes par effets gravitaires et centrifuge.

Dans le document WO-A-8605412, le fluide à séparer est introduit entre des lamelles pour acquérir un mouvement hélicoïdal. La séparation du fluide résulte de la force centrifuge et de l'effet de gravité.

Le document US-A-4.376.676 décrit un dispositif de séparation de l'huile et du gaz contenus dans un effluent pétrolier.

Les techniques utilisées dans ces documents n'utilisent pas l'effet de coalescence.

Dans le document US-A-4.855.050, la séparation du fluide s'effectue dans un dispositif comportant plusieurs modules. Le module de séparation de l'huile et de l'eau comporte des aubes ou des tuyaux dont la forme est adaptée pour communiquer au mélange introduit selon une direction sensiblement parallèle à l'axe de l'enceinte un mouvement tourbillonnaire de faible vitesse transformant la structure du mélange en un écoulement laminaire. De plus, la forme de l'aube est conçue pour qu'une goutte d'huile au cours de son mouvement ascendant coalesce sur l'aube.

Il a été découvert et c'est l'objet de la présente invention, qu'il est possible de réaliser une séparation de type statique par un procédé plus efficace que ceux qui sont connus dans l'art antérieur en réalisant la coalescence de la phase fluide dispersée sur une surface dont la géométrie permet de rassembler la phase dispersée dans une zone et la phase continue dans une autre zone distincte, tout en soumettant l'ensemble des deux phases à séparer à un mouvement de rotation obtenu par l'écoulement du mélange à séparer le long de la surface promotrice de coalescence.

Plus précisément, le procédé selon l'invention consiste à opérer en envoyant le mélange à séparer dans une enceinte ayant un axe verticale dans laquelle est disposée une surface hélicoïdale interne dont la génératrice est inclinée par rapport au plan perpendiculaire à l'axe de l'enceinte, en assurant un entraînement en rotation du mélange à séparer et en collectant les particules de phase dispersée sur la surface hélicoïdale interne disposée dans l'enceinte.

La présente invention concerne un procédé de séparation entre une phase fluide continue (I) et au moins une phase fluide dispersée (II), de densités différentes, une des phases étant une phase légère et l'autre une phase lourde. Selon ce procédé le mélange des phases (I) et (II) à séparer est envoyé dans un dispositif formé par au moins une enceinte sensiblement cylindrique, ladite enceinte ayant un axe vertical et une section droite interne et au moins une pièce interne de forme hélicoïdale dont au moins l'une des faces présente une surface hélicoïdale, délimitant au moins partiellement un passage hélicoïdal ayant des parois constituées par au moins la pièce interne et l'enceinte. La pièce interne est adaptée à ce que la distance maximale de parcours d'une particule de la phase dispersée (II) selon la direction radiale avant collision avec au moins une des parois dudit passage, soit inférieure au quart du diamètre périphérique de la pièce interne.

La surface hélicoïdale a une génératrice inclinée par rapport au plan perpendiculaire à l'axe de l'enceinte.

La surface hélicoïdale présente en projection sur un plan perpendiculaire à l'axe de ladite enceinte une surface au moins égale à la moitié de la section droite interne totale de l'enceinte cylindrique.

En outre, dans le procédé selon l'invention l'écoulement du mélange des phases (I) et (II) le long dudit passage provoque un mouvement de rotation dudit mélange autour de l'axe de l'enceinte, le mouvement de rotation créant une accélération centrifuge, conduisant à un déplacement différencié de la phase la plus légère vers l'axe, et de la phase la plus lourde vers la périphérie de l'enceinte au cours duquel la phase dispersée (II) coalesce au moins partiellement sur au moins l'une des parois dudit passage, lesdites parois étant constituées par au moins la pièce interne et l'enceinte, puis forme une phase continue séparée de la phase continue (I) par une interface, la phase légère et la phase lourde étant prélevées de part et d'autre de ladite interface.

L'invention propose également un dispositif pour la séparation d'un mélange comportant au moins une phase fluide continue (I) et au moins une phase fluide dispersée (II) de densités différentes, une phase étant une phase légère et l'autre une phase lourde, comportant une enceinte sensiblement cylindrique. Ce dispositif comporte au moins une pièce interne de forme hélicoïdale, ladite pièce interne ayant au moins une face présentant une surface hélicoïdale, ladite surface hélicoïdale délimitant au moins partiellement un passage hélicoïdal ayant des parois constituées par au moins la pièce interne et l'enceinte.

La pièce interne est adaptée à ce que la distance maximale de parcours d'une particule de la phase dispersée II selon la direction radiale avant collision avec au moins une paroi dudit passage, soit inférieure au quart du diamètre périphérique de la pièce interne, la surface hélicoïdale ayant une génératrice inclinée par rapport au plan perpendiculaire à l'axe de l'enceinte. La surface hélicoïdale présente en projection sur un plan perpendiculaire à l'axe de ladite enceinte une surface au moins égale à la moitié de la section droite interne totale de l'enceinte cylindrique. L'écoulement du mélange des phases (I) et (II) le long dudit passage provoque un mouvement de rotation dudit mélange autour de l'axe de l'enceinte créant une accélération centrifuge, conduisant à un déplacement differencié de la phase la plus légère vers l'axe de la phase la plus lourde vers la périphérie de l'enceinte au cours duquel la phase dispersée (II) coalesce au moins partiellement sur au moins l'une des parois dudit passage, lesdites parois étant constituées par au moins la pièce interne et l'enceinte, puis forme une phase continue séparée de la phase continue (I) par une interface, la phase légère et la phase lourde étant prélevées de part et d'autre de ladite interface.

Ladite pièce pourra être statique dans ladite enceinte.

Ladite pièce pourra être libre en rotation sur elle-même.

Le disposif pourra être dépourvu de moyen externe de mise en rotation de ladite pièce sur elle-même.

Les parois dudit passage pourront être formées en partie ou en totalité par un matériau préfèrentiellement mouillable par la phase dispersée.

L'axe de l'enceinte cylindrique pourra être vertical.

Le dispositif pourra comporter des moyens d'introduction tangentielle dudit mélange dans l'enceinte.

Ledit passage pourra comporter au moins une paroi de forme hélicoïdale décrite par une génératrice formant avec l'axe de l'enceinte sur au moins une partie de sa longueur un angle inférieur à 60 degrés.

La pente que forme par rapport à l'axe de l'enceinte la génératrice de la surface hélicoïdale 4 pourra diminuer lorsque la distance par rapport à l'axe diminue.

L'angle que forme la tangente en tout point de la courbe décrite par l'extrémité de la génératrice de la surface hélicoïdale par rapport à l'horizontale pourra être inférieur à 60 degrés.

Le mélange des phases à séparer pourra être envoyé dans un dispositif comportant une pluralité de surfaces hélicoïdales qui se déduisent les unes des autres par une translation uniforme et qui forment la surface hélicoïdale.

La distance entre deux éléments de surface appartenant à un même passage et situés sur une même verticale pourra être inférieure au dixième du diamètre interne de l'enceinte cylindrique.

L'axe central de la pièce statique hélicoïdale pourra être évidé et muni de perforations sur sa périphérie de manière à permettre la collecte et l'évacuation de la phase dispersée au travers dudit axe central.

La distance maximale de parcours d'une particule de phase dispersée (II) selon la direction radiale avant collision, pourra être inférieure au dixième du diamètre interne de l'enceinte.

Le passage pourra comporter un garnissage mouillable par la phase dispersée (II).

Le garnissage pourra être formé d'un tissu.

Le passage pourra comporter un garnissage constitué uniquement de fils mouillables par la phase dispersée dont l'axe de ces fils est dans le même sens que la circulation de la phase continue.

Les ondes perforées, dont les nappes, pourront être placées parallèlement à l'axe central de l'enceinte, disposées sur la surface supérieure du passage, et développées dans le sens de circulation de la phase continue.

L'une des parois du passage pourra être ondulée ou être munie de picots de forme cylindrique sphérique ou conique.

L'une des parois du passage pourra être recouverte d'un matériau de type non tissé et macro poreux mouillable par la phase dispersée.

La phase continue (I) pourra être une phase liquide et la phase dispersée (II) pourra comprendre au moins une phase liquide.

La phase dispersée (Ii) pourra être une phase organique et la phase continue (I) une phase aqueuse.

Une phase gazeuse finement dispersée pourra être introduite à la base de l'enceinte 2, pour favoriser la séparation de la phase dispersée (II).

La phase dispersée (II) pourra être une phase gazeuse et la phase continue (I) une phase liquide.

Le mélange des phases à séparer pourra être introduit à une extrémité supérieure de l'enceinte, au dessous de l'interface formé entre la phase continue (I) et la phase continue que forme la phase (II) dispersée à l'entrée après coalescence, la phase (I) étant évacuée en un point situé dans la partie inférieure du dispositif à la périphérie de l'enceinte et la phase (II) étant évacuée en un point situé dans la partie supérieure du dispositif à la périphérie de l'enceinte, au dessus de l'interface.

La phase dispersée (II) pourra être une phase aqueuse et la phase continue (I) une phase organique.

Le mélange des phases à séparer pourra être introduit à une extrémité supérieure de l'enceinte, la phase (II) dispersée à l'entrée étant évacuée en un point situé dans la partie inférieure de l'enceinte, au dessous de l'interface, la phase continue (I) étant évacuée en un point situé dans la partie inférieure de l'enceinte, au dessus de l'interface et au voisinage de l'axe de l'enceinte.

Une différence de potentiel électrique pourra être créée entre les parois inférieures et supérieures dudit passage.

La phase dispersée pourra comprendre une phase solide.

Le mélange à séparer pourra comprendre une phase gazeuse, une phase organique liquide, une phase aqueuse liquide et des particules solides, la phase gazeuse étant prélevée à une extrémité supérieure de l'enceinte, les particules solides à une extrémité inférieure, la phase organique et la phase aqueuse en des points intermédiaires.

Le mouvement de rotation provoque une accélération centrifuge qui communique à la phase continue une vitesse moyenne comprise, de préférence, entre 1 et 10 m/s.

Le procédé et le dispositif selon l'invention peuvent être avantageusement appliqués à une séparation de mélange de fluides pétroliers et/ou gaziers, notamment en milieu aquatique, en surface, entre deux eaux ou au fond de l'eau.

L'invention sera bien comprise et ses avantages apparaitront clairement à la lecture de la lecture des figures jointes parmi lesquelles :
- la figure 1 représente un mode de réalisation particulier de la présente invention,
- Les figures 2 et 3 représentent en coupe verticale une partie du dispositif selon l'invention,
- la figure 4 représente une enceinte du dispositif en coupe transversale,
- les figures 5 à 12 et 16 montrent en coupe transversale partielle des variantes du dispositif selon l'invention,
- les figures 13 à 15 montrent de façon schématique et en coupe des agencements particuliers ou des utilisations particulières du dispositif selon l'invention.

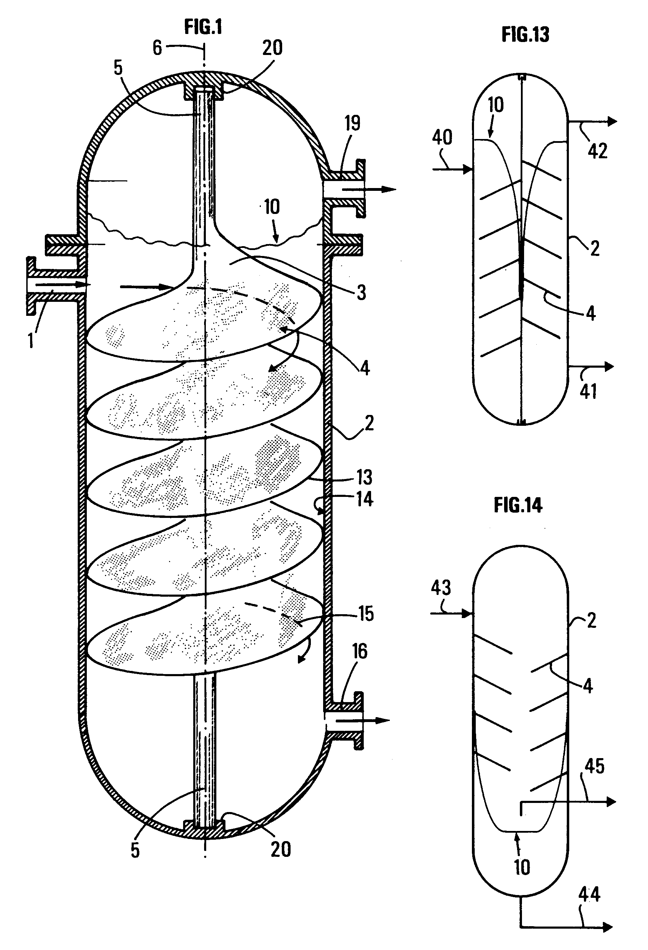

L'invention est décrite de manière plus complète notamment en relation avec le schéma de la figure 1, qui représente un mode de réalisation particulier. Ce mode de réalisation est appliqué à la séparation d'un mélange pour lequel la phase dispersée est la phase la plus légère et la phase continue la phase la plus lourde. Le dispositif représenté sur la figure 1 est plus particulièrement conçu pour séparer une phase liquide dispersée d'une phase liquide continue et correspond, par exemple, à la séparation d'une phase organique dispersée et d'une phase aqueuse continue.

Le mélange de phase aqueuse continue et de phase organique dispersée est introduit par le conduit d'entrée 1 dans l'enceinte verticale cylindrique 2. Sur la figure 1, cette enceinte est représentée en coupe selon un plan vertical médian.

Dans cette enceinte verticale est disposée une pièce 3 de forme hélicoïdale représentée en perspective sur la figure 1 dont la surface 4 est préférentiellement mouillable par la phase dispersée.

La référence 5 désigne le noyau central ou moyeu de l'hélice 3 et la référence 6 l'axe de l'hélice.

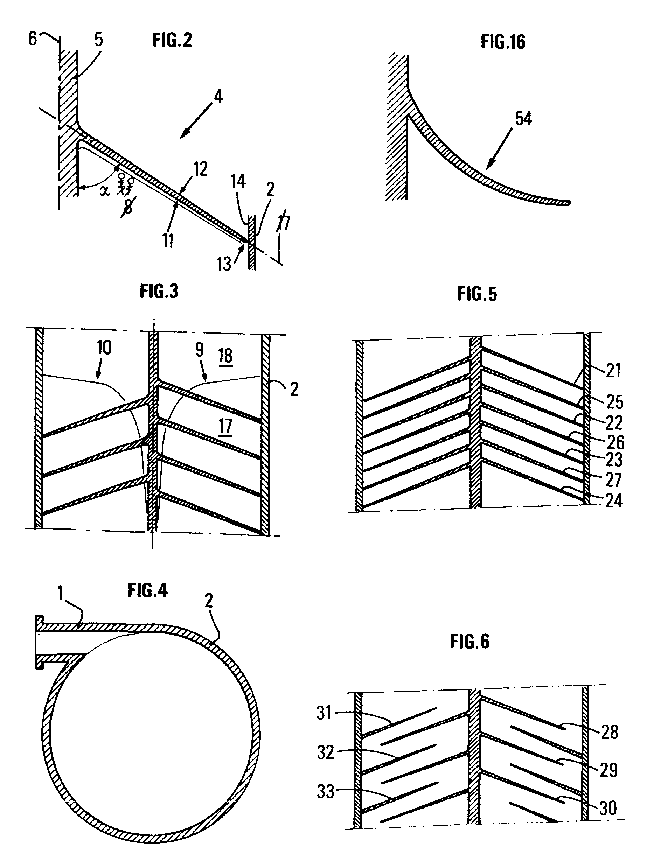

Une caractéristique essentielle de la géométrie de la pièce 3 est que la génératrice 7 de la surface hélicoïdale 4 est inclinée relativement à la direction verticale qui coïncide avec la direction de l'axe 6, comme cela est représenté à la figure 2. Ainsi, ladite phase dispersée légère coalesce sur la surface supérieure 12 de ladite pièce 3 et remonte le long de cette pièce hélicoïdale vers l'axe de l'enceinte qui est confondu avec l'axe de l'hélice, puis autour de cet axe vers l'interface I entre les deux phases situées à la partie supérieure de l'enceinte 2.

Lorsque la phase dispersée est la phase la plus lourde, cette phase coalesce sur la surface inférieure 11 de la pièce 3 et s'écoule le long de cette pièce hélicoïdale et plus particulièrement à la périphérie de cette dite pièce hélicoïdale. Dans cet exemple, les surfaces de la pièce 3 sont préférentiellement mouillables par la phase lourde.

Sur la figure 1, la pièce hélicoïdale 3 occupe toute la section de l'enceinte 2, son bord 13 étant sensiblement jointif de la surface interne 14 de l'enceinte 2.

Le mélange des deux phases est guidé en rotation du fait de son écoulement le long de la surface hélicoïdale. Le mouvement de la partie descendante du mélange est représenté sur le schéma de la figure 1 par la flèche en pointillé (référence 15). On obtient ainsi un effet de centrifugation qui s'ajoute à l'effet de gravité pour entraîner la phase la plus légère vers l'axe de l'enceinte et la phase la plus lourde vers la périphérie de l'enceinte.

Sur l'exemple représenté par la figure 1, la phase aqueuse débarrassée des gouttes de phase dispersée est prélevée dans la partie inférieure de l'enceinte 2, et évacuée par le conduit 16. La phase organique remonte autour de l'axe en formant une phase continue dont l'interface 9 avec la phase aqueuse, schématisée sur la figure 3, forme une surface de plus en plus évasée, se rapprochant dans sa partie supérieure d'une surface horizontale, au dessous de laquelle la phase continue 17 est la phase aqueuse et au dessus de laquelle la phase continue 18 est la phase organique.

La phase organique ainsi séparée est évacuée par le conduit 19. Ainsi, sur la figure 1, l'enceinte 2 comporte deux conduits d'évacuation 16 et 19, le premier par l'évacuation de la phase continue la plus dense, en l'occurence la phase aqueuse, et l'autre 19 pour l'évacuation de la phase continue, la plus légère en l'occurence la phase organique. Le premier orifice est situé à la partie inférieure de l'enceinte et l'autre à la partie supérieure. Le conduit 1 d'introduction du mélange est placé à un niveau situé entre les deux conduits 19 et 16.

De manière préférée, la surface de l'hélice sur laquelle s'effectue la coalescence est formée par un matériau mouillable par la phase dispersée, cette surface étant constituée par la face inférieure et supérieure de la pièce hélicoïdale 3. Ceci favorise la formation d'un film d'une partie de la phase dispersée qui a coalescer.

C'est sur ce film que va coalescer une partie de la phase dispersée non encore coalescée. Ainsi, par exemple, si la phase continue est une phase aqueuse et la phase dispersée une phase organique, cette surface peut être soit constituée par un matériau polymère, soit revêtu dudit matériau.

La pièce hélicoïdale 3 est de préférence démontable de manière à pouvoir, si nécessaire, la nettoyer en dehors de l'enceinte 2.

La pièce hélicoïdale 3 pourra être montée fixe en rotation dans l'enceinte 2 ou libre en rotation sur elle-même autour de l'axe 6. Selon l'une ou l'autre de ces variantes, le moyeu 5 sera ou non immobilisé en rotation sur les paliers 20.

Dans le cas où la pièce hélicoïdale est libre en rotation, et en l'absence de moyen moteur externe, son mouvement résultera de celui des phases qui y circulent.

Un tel mode de réalisation présente d'intéressantes caractéristiques :
- absence de moteur, ce qui répond à un besoin de simplicité pour ce type de dispositif,
- minimisation des pertes par frottement puisque l'hélice 3 est entraînée dans le sens de la phase qui générerait le plus de pertes par frottement sur les parois de l'hélice si cette dernière était fixe,
- diminution de l'effet de cisaillement sur la phase qui coalescé en évitant sa redispersion,
- action de l'effet de centrifugation en plus de l'effet gravitaire sur la surface de la pièce hélicoïdale, facilitant le drainage du film coalescé.

Le mélange à séparer est introduit de préférence de manière tangentielle dans l'enceinte 2, de manière à favoriser le mouvement de rotation des phases à séparer le long de la pièce hélicoïdale 3, comme l'illustre le schéma de la figure 4, sur laquelle est représentée en coupe l'arrivée du conduit 1 dans l'enceinte 2, la pièce hélicoïdale 3 n'étant pas représentée.

La vitesse atteinte par la phase continue est dans ce cas la plus élevée en périphérie de l'enceinte où la vitesse moyenne peut se situer par exemple entre 1 et 10m/s ce qui pour un diamètre de 0.1m conduit à une accélération centrifuge comprise entre 20 et 2000 m/s².

De manière générale l'accélération centrifuge est trés supérieure à la gravité à la périphérie de l'enceinte et les gouttes de phase dispersée suivent une trajectoire sensiblement horizontale.

La génératrice de la surface hélicoïdale 4 doit être suffisament inclinée par rapport à l'horizontale pour que la distance maximale de parcours d'une goutte selon la direction radiale avant collision soit réduite.

Si par exemple l'angle de la génératrice de la surface hélicoïdale 4 par rapport à la verticale est de 45 degrés, cette distance maximale de parcours selon la direction radiale avant collision est égale à la distance entre deux parties de surface hélicoïdales (successives). Cet angle est de préférence inférieur à 60 degrés sur au moins une partie de la génératrice.

De préférence, selon la présente invention, la distance maximale de parcours d'une goutte de phase dispersée selon la direction radiale et avant collision sera réduite. De bons résultats sont attendus lorsque cette distance est au moins inférieure au quart du diamètre périphérique de la pièce interne 3 et de préférence inférieure au dixième du diamètre interne de l'enceinte 2.

En définitive, le procédé de séparation entre une phase continue (I) et au moins une phase dispersée (II), de densités différentes se caractérise en ce que le mélange des phases (I) et (II) à séparer est envoyé dans un dispositif formé par au moins une enceinte de forme cylindrique 2 et au moins une pièce interne de forme hélicoïdale 3 dont au moins l'une des faces présentant une surface hélicoïdale, délimite partiellement un passage hélicoïdal, ladite pièce interne étant adaptée à ce que la distance maximale de parcours d'une particule de la phase dispersée II selon la direction radiale avant collision, soit inférieure au quart du diamètre périphérique de la pièce interne 3, ladite surface hélicoïdale présentant en projection sur un plan perpendiculaire à l'axe de ladite enceinte une surface au moins égale à la moitié de la section droite interne totale de l'enceinte cylindrique 2 et en ce que l'écoulement du mélange des phases (I) et (II) le long dudit passage provoque un mouvement de rotation autour de l'axe de l'enceinte 2, conduisant un déplacement de la phase la plus légère vers l'axe de la phase la plus lourde vers la périphérie de l'enceinte au cours duquel la phase dispersée (II) coalesce au moins partiellement sur les parois dudit passage puis forme une phase continue séparée de la phase continue (I) par une interface, la phase légère et la phase lourde étant prélevées de part et d'autre de ladite interface.

Les spires successives formant la pièce 3 doivent être de préférence relativement rapprochées pour favoriser la coalescence de la phase dispersée. Il a été ainsi trouvé que l'angle que forme la tangente en tout point de la spirale que décrit l'extrémité de la surface hélicoïdale sur laquelle coalesce la phase dispersée est de préférence inférieur à 60 degrés.

Pour augmenter la surface sur laquelle la phase dispersée vient coalescer il est possible de disposer une pluralité de surfaces hélicoïdales qui se déduisent les unes des autres par une translation hélicoïdale, l'ensemble de ces pièces formant la surface hélicoïdale 4.

Ainsi par exemple sur le schéma de la figure 5 les spires 21, 22, 23 et 24 appartiennent à une première surface hélicoïdale et les spires 25, 26 et 27 à une deuxième surface hélicoïdale qui se déduit de la première par translation. Les surfaces hélicoïdales formant la surface 4 peuvent être solidaires d'un axe central (cas de la figure 1) ou solidaire de l'enceinte. Il est également possible de disposer une première surface hélicoïdale solidaire de l'axe et une deuxième surface hélicoïdale solidaire de l'enceinte comme sur le schéma de la figure 6.

Sur le schéma de la figure 6, les spires 28, 29 et 30 appartiennent à une première surface hélicoïdale solidaire de l'axe ou moyeu central 5 et les spires 31, 32 et 33 d'une deuxième surface hélicoïdale solidaire de l'enceinte.

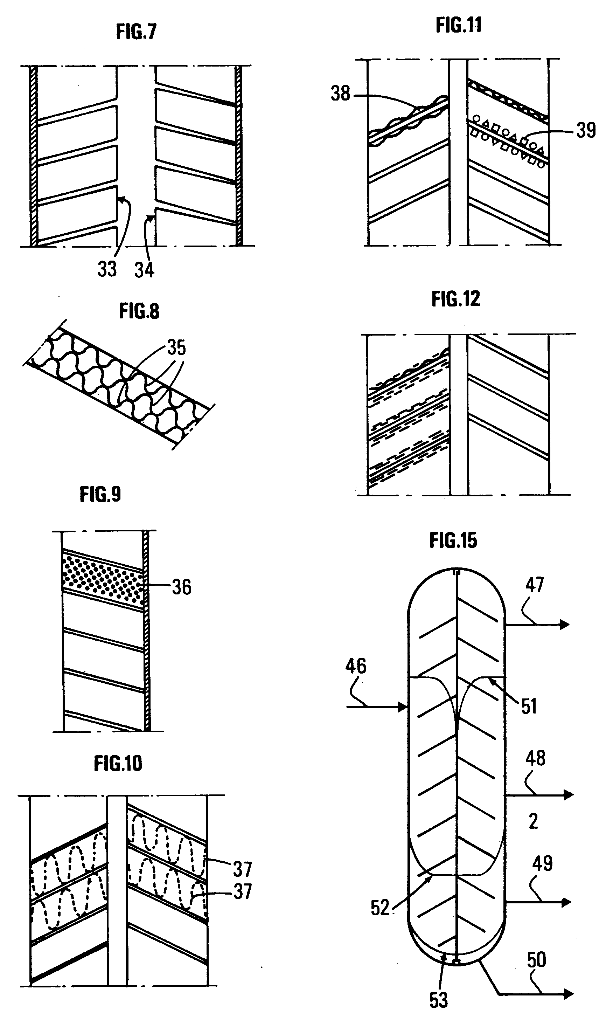

Dans un des modes de réalisation du procédé selon l'invention, lorsque la phase dispersée est la plus légère et la phase continue la plus lourde, la phase continue est entraînée vers la périphérie du dispositif et la phase dispersée coalesce sur les surfaces des spires en formant des gouttelettes qui se rassemblent sur la périphérie de l'axe central en formant un film qui est évacué par les perforations 33 et 34 effectuées en dessous de l'attache des spires sur l'axe central qui est lui-même évidé afin de permettre l'évacuation dudit film constitué essentiellement des composés formant la phase dispersée vers l'extérieur du dispositif. Une telle disposition est illustrée par le schéma de la figure 7.

Pour favoriser la coalescence de la phase dispersée, il est possible de disposer entre les spires de la pièce hélicoïdale 3 un garnissage mouillable par la phase dispersée. Ce garnissage peut être constitué par exemple par des fibres en matériau polymère si la phase dispersée est une phase organique.

Ces fibres peuvent être disposées sous forme d'un tissu, disposé de préférence parallèlement aux spires de la pièce hélicoïdale 3 en une ou plusieurs épaisseurs sous forme d'ondes superposées selon le schéma de la figure 8.

L'utilisation d'un garnissage facilite la coalescence de la phase dispersée en réduisant la distance maximale de parcours d'une goutte de phase dispersée avant la rencontre avec les éléments internes promoteurs de coalescence, et permet d'obtenir une distance maximale de parcours inférieure au dixième du diamètre interne de l'enceinte 2 sans avoir à respecter de condition particulière en ce qui concerne l'inclinaison des spires de la surface hélicoïdale 4.

Pour réduire les pertes de charge liées à la présence dudit garnissage il est possible dans une version préférée du dispositif que le garnissage soit constitué uniquement de fils 36 mouillables par la phase dispersée, et diposé entre les spires dans le sens de circulation du fluide afin de diminuer la perte de charge et d'éviter des effets de cisaillement des phases constituant le fluide. Cette version est illustrée par le schéma de la figure 9.

Il est également possible dans le but d'augmenter la coalescence de la phase dispersée de disposer entre les spires des ondes perforées 37 placées parallèlement à l'axe central et disposées à la face supérieure des spires et développées suivant le sens de rotation de la pièce statique de forme hélicoïdale H selon le schéma de la figure 10. Cet agencement permet d'augmenter la surface de contact sans pour autant entraver l'écoulement de la veine liquide circulant entre les spires. Ces ondes sont réalisées dans un matériau mouillable par la phase dispersée. Les perforations des ondes permettent la circulation des gouttes qui ont coalescé et qui se rassemblent pour former un film continu le long de l'axe central de la spirale et qui est évacué dans la partie supérieure du dispositif.

Pour favoriser la coalescence, il est également possible d'augmenter la surface de contact ou se produit cette coalescence en créant à la surface supérieure et inférieure des spires un relief composé par exemple d'ondulations 38 ou par des picots 39 de forme cylindrique sphérique, conique afin d'augmenter la probabilité de choc de la phase dispersée sans pour autant créer des forces de cisaillement. Ces picots peuvent être réalisés dans le même matériau que celui des spires, ils sont rendus solidaires de la surface des spires par soudage, ou moulage, ou emboutissage en fonction du matériau composant la pièce hélicoïdale 3. Cette version est illustrée par la figure 11.

Le procédé selon l'invention s'applique à différent type de séparation. Dans le cas de séparation ou la phase dispersée est constituée essentiellement de micro gouttelettes ou par exemple dans le cas où la séparation entre la phase dispersée et la phase continue doit répondre à des normes sévères, il est possible de réaliser cette séparation en tapissant la surface des spires d'un garnissage constitué de fibres macro poreuses ou de type matériau non tissé mouillable par la phase dispersée. Ce garnissage peut être rendu solidaire de la surface des spires par collage ou tout dispositif de fixation mécanique connu de l'homme de l'art. Ce garnissage permet notamment d'isoler la phase qui a coalescé du fluide circulant entre les spires afin d'éviter un entraînement mécanique de la phase coalescé ou des gouttelettes la composant, par la phase continue. Ce dispositif est représenté sur le schéma de la figure 12.

Le procédé selon l'invention s'applique à différents cas de séparations.

Comme dans l'exemple illustré par la figure 1, la phase dispersée (II) peut être plus légère que la phase continue (I). Par exemple la phase (II) peut être une phase organique et la phase continue (I) une phase aqueuse.

Le procédé s'applique ainsi au deshuilage de l'eau de production, séparée du pétrole brut sur un champ de production.

La phase dispersée peut également comprendre une phase gazeuse, la phase continue étant une phase liquide.

Dans ce cas la phase gazeuse est entrainée vers la partie centrale du dispositif puis se rassemble à une interface gaz-liquide pour former une phase continue qui est soutirée en un point situé dans la partie supérieure du dispositif, la phase liquide étant soutirée en un point situé dans la partie inférieure du dispositif.

Lorsque la phase dispersée (II) à l'entrée est la phase la plus légère, le mélange des phases à séparer est introduit à une extremité supérieure du dispositif au dessous de l'interface entre la phase continue (I) et la phase continue que forme la phase (II) après coalescence de manière tangentielle dans l'enceinte 2. Une telle disposition est illustrée sur le schéma de la figure 13.

Le mélange des phases à séparer est introduit par le conduit 40 au dessous de l'interface 10 entre les deux phases à séparer. La surface hélicoïdable 4 est schématisée en coupe. La phase continue (I) est évacuée à la périphérie de l'enceinte 2 par le conduit 41 et la phase (II) dispersée à l'entrée est évacuée par le conduit 42, à la périphérie de l'enceinte 2.

Pour favoriser la séparation de la phase dispersée lorsque cette phase dispersée est la plus légère, il est possible d'injecter à la base de l'enceinte 2 une phase gazeuse finement dispersée. Par exemple, pour deshuiler une phase aqueuse il est possible d'envoyer de fines bulles d'air sur la surface desquelles peuvent se fixer les micro gouttes de phase organique.

La phase dispersée (II) peut être également une phase plus lourde que la phase continue (I).

Par exemple la phase dispersée (II) peut être une phase aqueuse et la phase continue (I) une phase organique.

Dans ce cas le mélange à séparer étant introduit dans la partie supérieure du dispositif la phase aqueuse est entraînée vers la périphérie du dispositif puis se rassemble à une interface liquide-liquide 10 pour former une phase continue qui est soutirée au dessous de l'interface 10 en un point situé dans la partie inférieure du dispositif mais au dessus de l'interface 10 en un point proche de l'axe du dispositif.

Une telle disposition est illustrée par le schéma de la figure 14.

Le mélange des phases à séparer est introduit par le conduit 43 débouchant de manière tangentielle dans l'enceinte 2, la surface 4 schématisée en coupe est dans ce cas solidaire de l'enceinte 2. La phase (II) est évacuée par le conduit 44 en un point situé dans la partie inférieure de l'enceinte 2 au dessous de l'interface 10 et la phase (I) par le conduit 45 qui prélève la phase (I) en un point voisin de l'axe du dispositif, situé au dessus de l'interface 10.

La phase dispersée (II) peut également comprendre une phase solide qui est dans ce cas évacuée à la base du dispositif.

Le procédé s'applique notamment au dessalage de pétrole brut, la phase aqueuse chargée en sels étant dans ce cas la phase dispersée (II) et le pétrole brut la phase continue (I).

Les gouttes de phase aqueuse étant chargées à leur surface, il est possible dans ce cas de favoriser la séparation entre les phases et la coalescence sur la surface hélicoïdale 4 en appliquant une différence de potentiel entre deux spires successives. Une telle méthode peut être appliquée chaque fois que les gouttes ou particules formant la phase dispersée sont chargées à leur surface.

Le procédé peut également être appliqué pour séparer plus de deux phases dans le même dispositif.

Le procédé peut être appliqué par exemple pour séparer l'ensemble des phases sortant d'un puits de production de pétrole, c'est à dire le gaz associé, le pétrole, l'eau et éventuellement les particules solides dispersées.

Un tel cas d'application est illustré par le schéma de la figure 15.

Le mélange de phases à séparer sortant du puits de production est envoyé par le conduit 46 dans l'enceinte 2. Le gaz associé se rassemble dans la partie supérieure du dispositif et il est évacué par le conduit 47. Il forme avec le pétrole brut une interface 51. Le mélange à séparer est envoyé tangentiellement dans l'enceinte 2, au dessous de l'interface 51.

La phase aqueuse et les particules de phase solide se rassemblent dans la partie inférieure du dispositif. La phase aqueuse forme avec le pétrole brut une interface 52 le pétrole brut est évacué par le conduit 48 et la phase aqueuse par le conduit 49.

La phase solide se concentre à la base du dispositif, la surface 53 désignant la limite de la phase riche en particules solides. Cette phase riche en particules solides est évacuée par le conduit 50.

La figure 16 représente le cas d'une surface hélicoïdale dont la coupe, par un plan vertical, représente une forme curviligne 54 ne correspondant pas à un segment de droite.

## Revendications

1. Procédé de séparation entre une phase fluide continue (I) et au moins une phase fluide dispersée (II), de densités différentes, une phase étant une phase légère et l'autre une phase lourde, selon lequel le mélange des phases (I) et (II) à séparer est envoyé dans un dispositif formé par au moins une enceinte sensiblement cylindrique (2), ladite enceinte ayant un axe vertical et une section droite interne et au moins une pièce interne de forme hélicoïdale (3) dont au moins l'une des faces présente une surface hélicoïdale, délimitant au moins partiellement un passage hélicoïdal ayant des parois constituées par au moins la pièce interne et l'enceinte, ladite pièce interne étant adaptée à ce que la distance maximale de parcours d'une particule de la phase dispersée (II) selon la direction radiale avant collision avec au moins une paroi dudit passage, soit inférieure au quart du diamètre périphérique de la pièce interne (3), ladite surface hélicoïdale ayant une génératrice inclinée par rapport au plan perpendiculaire à l'axe de l'enceinte, ladite surface hélicoïdale présentant en projection sur un plan perpendiculaire à l'axe de ladite enceinte une surface au moins égale à la moitié de la section droite interne totale de l'enceinte cylindrique (2) et selon lequel l'écoulement du mélange des phases (I) et (II) le long dudit passage provoque un mouvement de rotation dudit mélange autour de l'axe de l'enceinte (2), ledit mouvement de rotation créant une accélération centrifuge conduisant à un déplacement différencié de la phase la plus légère vers l'axe et de la phase la plus lourde vers la périphérie de l'enceinte, au cours duquel la phase dispersée (II) coalesce au moins partiellement sur au moins l'une des parois dudit passage, lesdites parois étant constituées par au moins la pièce interne et l'enceinte, puis forme une phase continue séparée de la phase continue (I) par une interface, la phase légère et la phase lourde étant prélevées de part et d'autre de ladite interface.

2. Dispositif pour séparer un mélange comportant au moins une phase fluide continue (I) et au moins une phase fluide dispersée (II) de densités différentes, une phase étant une phase légère et l'autre une phase lourde, ledit dispositif comporte une enceinte sensiblement cylindrique (2) et au moins une pièce interne de forme hélicoïdale (3), ladite pièce interne ayant au moins une face présentant une surface hélicoïdale, ladite surface hélicoïdale délimitant au moins partiellement un passage hélicoïdal ayant des parois constituées par au moins ladite pièce interne et l'enceinte, ladite pièce interne étant adaptée à ce que la distance maximale de parcours d'une particule de la phase dispersée (II) selon la direction radiale avant collision avec au moins une des parois dudit passage, soit inférieure au quart du diamètre périphérique de la pièce interne (3), ladite surface hélicoïdale ayant une génératrice inclinée par rapport au plan perpendiculaire à l'axe de l'enceinte, ladite surface hélicoïdale présentant en projection sur un plan perpendiculaire à l'axe de ladite enceinte une surface au moins égale à la moitié de la section droite interne totale de l'enceinte cylindrique (2) et ledit dispositif est en outre adapté à ce que l'écoulement du mélange des phases (I) et (II) le long dudit passage provoque un mouvement de rotation dudit mélange autour de l'axe de l'enceinte (2), ledit mouvement de rotation créant une accélération centrifuge conduisant à un déplacement differencié de la phase la plus légère vers l'axe et de la phase la plus lourde vers la périphérie de l'enceinte, au cours duquel la phase dispersée (II) coalesce au moins partiellement sur au moins l'une des parois dudit passage, lesdites parois étant constituées par au moins la pièce interne et l'enceinte, puis forme une phase continue séparée de la phase continue (I) par une interface, et à ce que la phase légère et la phase lourde soient prélevées de part et d'autre de ladite interface.

3. Dispositif selon la revendication 2, caractérisé en ce que ladite pièce est statique dans ladite enceinte.

4. Dispositif selon la revendication 2, caractérisé en ce que ladite pièce est libre en rotation sur elle-même.

5. Dispositif selon la revendication 4, caractérisé en ce qu'il est dépourvu de moyen externe de mise en rotation de ladite pièce sur elle-même.

6. Dispositif selon l'une des revendications 2 à 5, caractérisé en ce que les parois dudit passage sont formées en partie ou en totalité par un matériau préfèrentiellement mouillable par la phase dispersée.

7. Dispositif selon l'une des revendications 2 à 6, caractérisé en ce que l'axe de l'enceinte cylindrique (2) est vertical.

8. Dispositif selon l'une des revendications 2 à 7, caractérisé en ce qu'il comporte des moyens d'introduction tangentielle dudit mélange dans l'enceinte 2.

9. Dispositif selon l'une des revendications 2 à 8, caractérisé en ce que ledit passage comporte au moins une paroi de forme hélicoïdale décrite par une génératrice formant avec l'axe de l'enceinte sur au moins une partie de sa longueur un angle inférieur à 60 degrés.

10. Dispositif selon l'une des revendications 2 à 9, caractérisé en ce que la pente que forme par rapport à l'axe de l'enceinte la génératrice de la surface hélicoïdale (4) diminue lorsque la distance par rapport à l'axe diminue.

11. Dispositif selon l'une des revendications 2 à 10, caractérisé en ce que l'angle que forme la tangente en tout point de la courbe décrite par l'extrémité de la génératrice de la surface hélicoïdale par rapport à l'horizontale est inférieur à 60 degrés.

12. Dispositif selon l'une des revendications 2 à 11, caractérisé en ce que le mélange des phases à séparer est envoyé dans un dispositif comportant une pluralité de surfaces hélicoïdales qui se déduisent les unes des autres par une translation uniforme et qui forment la surface hélicoïdale.

13. Dispositif selon l'une des revendications 2 à 12, caractérisé en ce que la distance entre deux éléments de surface appartenant à un même passage et situés sur une même verticale est inférieure au dixième du diamètre interne de l'enceinte cylindrique.

14. Dispositif selon l'une des revendications 2 à 13, caractérisé en ce que l'axe central de la piece statique hélicoïdale 3 est évidé et muni de perforations sur sa périphérie de manière à permettre la collecte et l'évacuation de la phase dispersée au travers dudit axe central .

15. Dispositif selon l'une des revendications 2 à 14, caractérisé en ce que la distance maximale de parcours d'une particule de phase dispersée II selon la direction radiale avant collision, est inférieure au dixième du diamètre interne de l'enceinte (2).

16. Dispositif selon l'une des revendications 2 à 15, caractérisé en ce que ledit passage comporte un garnissage mouillable par la phase dispersée (II).

17. Dispositif selon la revendication 16, caractérisé en ce que le garnissage est formé d'un tissu.

18. Dispositif selon l'une des revendications 2 à 15, caractérisé en ce que ledit passage comporte un garnissage constitué uniquement de fils mouillables par la phase dispersée dont l'axe de ces fils est dans le même sens que la circulation de la phase continue.

19. Dispositif selon l'une des revendications 2 à 15, caractérisé en ce que des ondes perforées, dont les nappes, sont placées parallélement à l'axe central de l'enceinte, disposées sur la surface supérieure du passage, et développées dans le sens de circulation de la phase continue.

20. Dispositif selon l'une des revendications 2 à 19, caractérisé en ce que l'une des parois du passage est ondulée ou est munie de picots de forme cylindrique sphérique ou conique.

21. Dispositif selon l'une des revendications 2 à 20, caractérisé en ce qu'au moins l'une des parois du passage est recouverte d'un matériau de type non tissé et macro poreux mouillable par la phase dispersée.

22. Procédé mettant en oeuvre un dispositif selon l'une des revendications 2 à 21, caractérisé en ce que la phase continue (I) est une phase liquide et que la phase dispersée (II) comprend au moins une phase liquide.

23. Procédé mettant en oeuvre un dispositif selon l'une des revendications 2 à 21, caractérisé en ce que la phase dispersée (II) est une phase organique et la phase continue (I) une phase aqueuse.

24. Procédé mettant en oeuvre un dispositif selon l'une des revendications 2 à 21, caractérisé en ce qu'une phase gazeuse finement dispersée est introduite à la base de l'enceinte (2), pour favoriser la séparation de la phase dispersée (II).

25. Procédé mettant en oeuvre un dispositif selon l'une des revendications 2 à 21, caractérisé en ce que la phase dispersée (II) est une phase gazeuse et la phase continue (I) une phase liquide.

26. Procédé selon l'une des revendications 23 à 25, caractérisé en ce que le mélange des phases à séparer est introduit à une extrémité supérieure de l'enceinte (2), au dessous de l'interface (10) formé entre la phase continue (I) et la phase continue que forme la phase (II) dispersée à l'entrée après coalescence, la phase (I) étant évacuée en un point situé dans la partie inférieure du dispositif à la périphérie de l'enceinte (2) et la phase (II) étant évacuée en un point situé dans la partie supérieure du dispositif à la périphérie de l'enceinte (2), au dessus de l'interface (10).

27. Procédé mettant en oeuvre un dispositif selon l'une des revendications 2 à 21, caractérisé en ce que la phase dispersée (II) est une phase aqueuse et la phase continue (I) une phase organique.

28. Procédé selon la revendication 27, caractérisé en ce que le mélange des phases à séparer est introduit à une extrémité supérieure de l'enceinte (2), la phase (II) dispersée à l'entrée étant évacuée en un point situé dans la partie inférieure de l'enceinte (2), au dessous de l'interface (10), la phase continue (I) étant évacuée en un point situé dans la partie inférieure de l'enceinte (2), au dessus de l'interface (10) et au voisinage de l'axe de l'enceinte (2).

29. Procédé mettant en oeuvre un dispositif selon l'une des revendications 2 à 21, caractérisé en ce qu'une différence de potentiel électrique est créée entre les parois inférieures et supérieures dudit passage.

30. Procédé mettant en oeuvre un dispositif selon l'une des revendications 2 à 21, caractérisé en ce que le mélange à séparer comprend une phase gazeuse, une phase organique liquide, une phase aqueuse liquide et des particules solides, la phase gazeuse étant prélevée à une extrémité supérieure de l'enceinte (2), les particules solides à une extrémité inférieure, la phase organique et la phase aqueuse en des points intermédiaires.

31. Procédé selon la revendication 1, caractérisé en ce que le mouvement de rotation provoque une accélération centrifuge communiquant à la phase continue une vitesse moyenne comprise entre 1 et 10 m/s.

32. Utilisation du dispositif ou du procédé selon l'une des revendications 1 à 31 à une séparation de mélange de fluides pétroliers et/ou gaziers, notamment en milieu aquatique, en surface, entre deux eaux ou au fond de l'eau.

## Claims

1. A method for separating a continuous fluid phase (I) from at least one dispersed fluid phase (II), each of different densities, one phasing being a light phase and the other phase being a heavy phase, whereby the mixture of phases (I) and (II) to be separated is introduced into a device comprising at least one substantially cylindrical chamber (2), this chamber having a vertical axis and a straight internal section, and at least one internal helical shaped part (3) of which at least one of the faces has a helical surface, delineating at least partially a helical passage with walls made up of at least the internal part and the chamber, the internal part being designed so that the maximum distance a particle of the dispersed phase (II) has to travel in the radial direction before colliding with at least one wall of the passage is less than one quarter of the peripheral diameter of the internal part (3), this helical surface having a generatrix that is inclined relative to the plane perpendicular to the axis of the chamber, the helical surface having projecting on a plane perpendicular to the axis of the chamber a surface at least equal to half of the total straight internal section of the cylindrical chamber (2) and whereby the flow of the mixture of phases (I) and (II) along the passage causes a rotational movement of the mixture around the axis of the chamber (2), this rotational movement creating a centrifugal acceleration causing the phases to move differently, the lighter phase towards the axis and the heavier phase towards the periphery of the chamber, during the course of which the dispersed phase (II) coalesces at least partially on at least one of the walls of the passage, these walls being formed by at least the internal part and the chamber, then forms a continuous phase separated from the continuous phase (I) by an interface, the light phase and the heavy phase being taken from respective different sides of the interface.

2. A device for separating a mixture comprising at least one continuous fluid phase (I) and at least one dispersed fluid phase (II), each of different densities, one phase being a light phase and the other a heavy phase, the device comprising a substantially cylindrical chamber (2) and at least one helical shaped internal part (3), this internal part having at least one face with a helical surface, this helical surface delineating at least partially a helical passage whose walls are made up by at least the internal part and the chamber, the internal part being designed so that the maximum distance a particle of dispersed phase (II) has to travel in the radial direction before colliding with at least one of the walls of the passage is less than one quarter of the peripheral diameter of the internal part (3), this helical surface having a generatrix that is inclined with respect to the plane perpendicular to the axis of the chamber, the helical surface having projecting on a plane perpendicular to the axis of the chamber a surface that is at least equal half of the total internal straight section of the cylindrical chamber (2), this device being designed so that the flow of the mixture of phases (I) and (II) along the passage causes a rotational movement of the mixture around the axis of the chamber (2), this rotational movement inducing a centrifugal acceleration causing the phases to move differently, the lightest towards the axis and the heaviest phase towards the periphery of the chamber, during the course of which the dispersed phase (II) coalesces at least partially on at least one of the walls of the passage, these walls being formed by at least the internal part and the chamber, then forms a continuous phase separated from the continuous phase (I) by an interface, the light phase and the heavy phase being removed from respective different sides of the interface.

3. A device as claimed in claim 2, characterised in that the part is static inside the chamber.

4. A device as claimed in claim 2, characterised in that the part rotates freely on itself.

5. A device as claimed in claim 4, characterised in that there are no external means to drive the part in rotation on itself.

6. A device as claimed in one of claims 2 to 5, characterised in that the walls of the passage are formed partially or totally by a material that is preferably wettable by the dispersed phase.

7. A device as claimed in one of claims 2 to 6, characterised in that the axis of the cylindrical chamber (2) is vertical.

8. A device as claimed in one of claims 2 to 7, characterised in that it has means for introducing the mixture into the chamber 2 at a tangent.

9. A device as claimed in one of claims 2 to 8, characterised in that the passage comprises at least one helical shaped wall described by a generatrix forming an angle of less than 60 degrees with the axis of the chamber over at least a part of its length.

10. A device as claimed in one of claims 2 to 9, characterised in that the incline formed by the generatrix of the helical surface (4) relative to the axis of the chamber decreases as the distance relative to the axis deceases.

11. A device as claimed in one of claims 2 to 10, characterised in that the angle formed by the tangent at any point of the curve described by the extremity of the generatrix of the helical surface relative to the horizontal is less than 60 degrees.

12. A device as claimed in one of claims 2 to 11, characterised in that the mixture of phases to be separated is introduced into a device having a plurality of helical surfaces which are distanced apart from each other by a uniform translation and which form the helical surface.

13. A device as claimed in one of claims 2 to 12, characterised in that the distance between surface elements belonging to a same passage and located on a same vertical is less than one tenth of the internal diameter of the cylindrical chamber.

14. A device as claimed in one of claims 2 to 13, characterised in that the central axis of the static helical part 3 is recessed and provided with perforations over its periphery to allow the accumulation and evacuation of the dispersed phase through the central axis.

15. A device as claimed in one of claims 2 to 14, characterised in that the maximum distance a particle of dispersed phase II has to travel in the radial direction before colliding is less than one tenth of the internal diameter of the chamber (2).

16. A device as claimed in one of claims 2 to 15, characterised in that the passage has a lining that is wettable by the dispersed phase.

17. A device as claimed in claim 16, characterised in that the lining is made from a fabric.

18. A device as claimed in one of claims 2 to 15, characterised in that the passage has a lining made solely from threads that are wettable by the dispersed phase, the axis of these threads following the same direction as that in which the continuous phase flows.

19. A device as claimed in one of claims 2 to 15, characterised in that perforated undulations, including the bases, are placed parallel to the central axis of the chamber, arranged on the upper surface of the passage and extended in the direction in which the continuous phase circulates.

20. A device as claimed in one of claims 2 to 19, characterised in that one of the passage walls is undulated or is provided with cylindrical, spherical or conical shaped protrusions.

21. A device as claimed in one of claims 2 to 20, characterised in that at least one of the walls of the passage is coated with a non-woven macroporous material that is wettable by the dispersed phase.

22. A method for implementing a device as claimed in one of claims 2 to 21, characterised in that the continuous phase (I) is a liquid phase and the dispersed phase (II) contains at least one liquid phase.

23. A method for implementing a device as claimed in one of claims 2 to 21, characterised in that the dispersed phase (II) is an organic phase and the continuous phase (I) is an aqueous phase.

24. A method for implementing a device as claimed in one of claims 2 to 21, characterised in that the dispersed phase (II) is introduced at the base of the chamber (2) in order to encourage separation of the dispersed phase (II).

25. A method for implementing a device as claimed in one of claims 2 to 21, characterised in that the dispersed phase (II) is a gaseous phase and the continuous phase (I) is a liquid phase.

26. A method as claimed in one of claims 23 to 25, characterised in that the mixture of phases to be separated is introduced from an upper extremity of the chamber (2) below the interface (10) formed between the continuous phase (I) and the continuous phase formed by the dispersed phase (II) at the inlet after coalescence, phase (I) being evacuated from a point located in the lower part of the device at the periphery of the chamber (2) and phase (II) being evacuated from a point located in the upper part of the device at the periphery of the chamber (2) above the interface (10).

27. A method for implementing a device as claimed in one of claims 2 to 21, characterised in that the dispersed phase (II) is an aqueous phase and the continuous phase (I) an organic phase.

28. A method as claimed in claim 27, characterised in that the mixture of phases to be separated is introduced at an upper extremity of the chamber (2), the dispersed phase (II) at the inlet being evacuated from a point located in the lower part of the chamber (2) below the interface (10), the continuous phase (I) being evacuated from a point located in the lower part of the chamber (2) above the interface (10) and close to the axis of the chamber (2).

29. A method for implementing a device as claimed in one of claims 2 to 21, characterised in that a difference in electric potential is created between the lower walls and the upper walls of the passage.

30. A method for implementing a device as claimed in one of claims 2 to 21, characterised in that the mixture to be separated comprises a gaseous phase, a liquid organic phase, a liquid aqueous phase and solid particles, the gaseous phase being taken from an upper extremity of the chamber (2), the solid particles from a lower extremity, the organic and aqueous phases from intermediate points.

31. A method as claimed in claim 1, characterised in that the rotational movement causes a centrifugal acceleration, which imparts to the continuous phase an average speed ranging between 1 and 10 m/s.

32. Use of the device or method of one of claims 1 to 30 for separating a mixture of petroleum and/or gas fluids, particularly in an aquatic environment, at the surface, between two water levels or on the water bed.

## Patentansprüche

1. Verfahren zum Trennen zwischen einer kontinuierlichen fluiden Phase (I) und wenigstens einer fluiden dispergierten Phase (II), unterschiedlicher Dichten, wobei eine Phase eine leichte Phase und die andere eine schwere Phase ist, wonach das Gemisch der zu trennenden Phasen (I) und (II) in eine Vorrichtung geleitet wird, die durch wenigstens einen im wesentlichen zylindrischen umschlossenen Raum (2) gebildet wird, wobei dieser umschlossene Raum eine vertikale Achse und einen geraden Innenquerschnitt und wenigstens ein Innenbauteil von Spiralgestalt (3) hat, von dem wenigstens eine der Flächen eine Spiralfläche bildet, die wenigstens teilweise einen Spiraldurchlaß mit Wandungen begrenzt, die durch wenigstens das Innenbauteil und den umschlossenen Raum gebildet sind, wobei dieses Innenbauteil so ausgelegt ist, daß der maximale Durchlaufweg einer Partikel der dispergierten Phase (II) gemäß der Radialrichtung vor Kollision mit wenigstens einer Wandung dieses Durchlasses kleiner als der Viertel Umfangsdurchmesser des Innenbauteils (3) ist, wobei die Spiralfläche eine Erzeugende hat, die bezüglich der Ebene senkrecht zur Achse des umschlossenen Raums geneigt ist, wobei diese Spiralfläche in der Projektion auf eine Ebene senkrecht zur Achse dieses umschlossenen Raums eine Fläche aufweist, die wenigstens gleich der Hälfte des geraden Gesamtinnenquerschnitts des zylindrischen umschlossenen Raums (2) ist und wonach die Strömung des Gemisches der Phasen (I) und (II) längs dieses Durchlasses eine Drehbewegung dieses Gemisches um die Achse des umschlossenen Raums (2) hervorruft, wobei diese Drehbewegung eine Zentrifugalbeschleunigung erzeugt, die zu einer unterschiedlichen Fortbewegung der leichteren Phase gegen die Achse und der schwereren Phase gegen den Umfang des umschlossenen Raums führt, während die dispergierte Phase (II) wenigstens teilweise auf einer der Wandungen dieses Durchlasses koalesziert, wobei diese Wandungen durch wenigstens das Innenbauteil und den umschlossenen Raum gebildet werden, dann eine kontinuierliche Phase, die von der kontinuierlichen Phase (I) durch eine Grenzfläche getrennt ist, bildet, wobei die leichte Phase und die schwere Phase zu beiden Seiten dieser Grenzfläche entnommen werden.

2. Vorrichtung zum Trennen eines Gemisches, das wenigstens eine fluide kontinuierliche Phase (I) und wenigstens eine dispergierte fluide Phase (II) unterschiedlicher Dichten umfaßt, wobei eine Phase eine leichte und die andere eine schwere Phase ist, die Vorrichtung einen im wesentlichen zylindrischen umschlossenen Raum (2) umfaßt und wenigstens ein Innenbauteil von Spiralgestalt (3) wobei das Innenbauteil wenigstens eine Fläche hat, die eine Spiraloberfläche besitzt, wobei diese Spiraloberfläche wenigstens teilweise einen spiralförmigen Durchlaß begrenzt, dessen Wandungen durch wenigstens dieses Innenbauteil und diesen umschlossenen Raum gebildet sind, wobei das Innenbauteil so ausgelegt ist, daß der maximale Durchlaufweg einer Partikel der dispergierten Phase (II) längs der Radialrichtung vor der Kollision mit wenigstens einer der Wandungen dieses Durchlasses kleiner als ein Viertel des Umfangsdurchmessers dieses Innenbauteils (3) ist, wobei die Spiralfläche eine Erzeugende hat, die bezüglich der Ebene senkrecht zur Achse des umschlossenen Raums geneigt ist, wobei diese Spiralfläche in der Projektion auf eine Ebene senkrecht zur Achse dieses umschlossenen Raums eine Fläche hat, die wenigstens gleich der Hälfte des geraden Gesamtinnenquerschnitts des zylindrischen umschlossenen Raums (2) ist und diese Vorrichtung im übrigen so ausgelegt ist, daß die Strömung des Gemisches der Phasen (I) und (II) längs dieses Durchlasses eine Drehbewegung dieses Gemisches um die Achse des umschlossenen Raums (2) hervorruft, wobei diese Drehbewegung eine Zentrifugalbeschleunigung erzeugt, die zu einer unterschiedlichen Bewegung der leichteren Phase gegen die Achse und der schwereren Phase gegen den Umfang des umschlossenen Raums führt, während der die dispergierte Phase (II) wenigstens teilweise auf wenigstens einer der Wandungen dieses Durchlasses koalesziert, wobei diese Wandungen durch wenigstens das Innenbauteil und den umschlossenen Raum gebildet sind, und dann eine kontinuierliche Phase getrennt von der kontinuierlichen Phase (I) durch eine Grenzfläche bildet und daß die leichte Phase und die schwere Phase zu beiden Seiten dieser Grenzfläche entnommen werden.

3. Vorrichtung nach Anspruch 2, dadurch gekennzeichnet, daß dieses Bauteil in diesem umschlossenen Raum statisch ist.

4. Vorrichtung nach Anspruch 2, dadurch gekennzeichnet, daß dieses Bauteil um sich selbst frei drehbeweglich ist.

5. Vorrichtung nach Anspruch 4, dadurch gekennzeichnet, daß es frei von seinem äußeren Mittel zum In-Drehung-Versetzen dieses Bauteils um sich selbst ist.

6. Vorrichtung nach einem der Ansprüche 2 bis 5, dadurch gekennzeichnet, daß die Wandungen dieses Duchlasses zum Teil oder insgesamt durch ein Material gebildet sind, das bevorzugt durch die dispergierte Phase benetzbar ist.

7. Vorrichtung nach einem der Ansprüche 2 bis 6, dadurch gekennzeichnet, daß die Achse des zylindrischen umschlossenen Raums (2) vertikal ist.

8. Vorrichtung nach einem der Ansprüche 2 bis 7, dadurch gekennzeichnet, daß sie Mittel zum tangentialen Einführen dieses Gemisches in den umschlossenen Raum 2 umfaßt.

9. Vorrichtung nach einem der Ansprüche 2 bis 8, dadurch gekennzeichnet, daß dieser Durchlaß wenigstens eine Wandung spiralförmiger Gestalt umfaßt, die durch eine Erzeugende beschrieben wird, die mit der Achse des umschlossenen Raums auf wenigstens einem Teil ihrer Länge einen Winkel von weniger als 60 Grad bildet.

10. Vorrichtung nach einem der Ansprüche 2 bis 9, dadurch gekennzeichnet, daß die Neigung, die bezüglich der Achse des umschlossenen Raums die Erzeugende der Spiralfläche (4) bildet, abnimmt, wenn die Entfernung bezogen auf die Achse abnimmt.

11. Vorrichtung nach einem der Ansprüche 2 bis 10, dadurch gekennzeichnet, daß der Winkel, den die Tangente an jedem Punkt der durch das Ende der Erzeugenden der Spiralfläche bezüglich der horizontalen beschriebenen Kurve bildet, kleiner als 60 Grad ist.

12. Vorrichtung nach einem der Ansprüche 2 bis 11, dadurch gekennzeichnet, daß das Gemisch der zu trennenden Phasen in eine Vorrichtung geleitet wird, die eine Vielzahl von Spiralflächen umfaßt, die sich voneinander durch gleichförmige Translation ableiten und die die Spiralfläche bilden.

13. Vorrichtung nach einem der Ansprüche 2 bis 12, dadurch gekennzeichnet, daß die Entfernung zwischen zwei zu ein und dem gleichen Durchlaß gehörenden Oberflächenelementen und die auf ein und der gleichen Vertikale angeordnet sind, kleiner als ein Zehntel des Innendurchmessers des zylindrischen umschlossenen Raums ist.

14. Vorrichtung nach einem der Ansprüche 2 bis 13, dadurch gekennzeichnet, daß die mittige Achse des spiralförmigen statischen Bauteils 3 ausgehöhlt und mit Perforationen auf ihrem Umfang derart versehen ist, daß Sammeln und Abziehen der dispergierten Phase durch diese zentrale Achse hindurch möglich werden.

15. Vorrichtung nach einem der Ansprüche 2 bis 14, dadurch gekennzeichnet, daß die maximale Entfernung der Wanderung einer Partikel dispergierter Phase II gemäß der Radialrichtung vor Kollision kleiner als ein Zehntel des Innendurchmessers des umschlossenen Raums (2) ist.

16. Vorrichtung nach einem der Ansprüche 2 bis 15, dadurch gekennzeichnet, daß dieser Durchlaß eine von der dispergierten Phase (II) benetzbare Auskleidung oder Füllung enthält.

17. Vorrichtung nach Anspruch 16, dadurch gekennzeichnet, daß die Füllung durch ein Gewebe gebildet ist.

18. Vorrichtung nach einem der Ansprüche 2 bis 15, dadurch gekennzeichnet, daß dieser Durchlaß eine Füllung umfaßt, die allein aus Drähten oder Fasern besteht, die durch die dispergierte Phase benetzbar sind, wobei die Achse dieser Fäden in der gleichen Richtung wie die Zirkulation der kontinuierlichen Phase liegt.

19. Vorrichtung nach einem der Ansprüche 2 bis 15, dadurch gekennzeichnet, daß perforierte Wellen, somit die Bahnen, parallel zur mittigen Achse des umschlossenen Raums angeordnet und auf der Oberfläche des Durchlasses angeordnet und in Zirkulationsrichtung der kontinuierlichen Phase abgewickelt sind.

20. Vorrichtung nach einem der Ansprüche 2 bis 19, dadurch gekennzeichnet, daß wenigstens eine der Wandungen des Durchlasses gewellt oder mit Stacheln oder Stippen zylindrischer kugeliger oder konischer Gestalt versehen ist.

21. Vorrichtung nach einem der Ansprüche 2 bis 20, dadurch gekennzeichnet, daß wenigstens eine der Wandungen des Durchlasses von einem Material nicht gewebten makroporösen Typs versehen ist, das durch die dispergierte Phase benetzbar ist.

22. Verfahren zum Einsatz der Vorrichtung nach einem der Ansprüche 2 bis 21, dadurch gekennzeichnet, daß die kontinuierliche Phase (I) eine flüssige Phase ist und daß die dispergierte Phase (II) wenigstens eine flüssige Phase umfaßt.

23. Verfahren zum Einsatz einer Vorrichtung gemäß einem der Ansprüche 2 bis 21, dadurch gekennzeichnet, daß die dispergierte Phase (II) eine organische Phase und die kontinuierliche Phase (I) eine wässrige Phase ist.

24. Verfahren zum Einsatz einer Vorrichtung gemäß einem der Ansprüche 2 bis 21, dadurch gekennzeichnet, daß eine gasförmige feindispergierte Phase an der Basis des umschlossenen Raums (2) eingeführt wird, um die Trennung von der dispergierten Phase (II) zu begünstigen.

25. Verfahren zum Einsatz einer Vorrichtung gemäß einem der Ansprüche 2 bis 21, dadurch gekennzeichnet, daß die dispergierte Phase (II) eine gasförmige Phase und die kontinuierliche Phase (I) eine flüssige Phase ist.

26. Verfahren nach einem der Ansprüche 23 bis 25, dadurch gekennzeichnet, daß das Gemisch der zu trennenden Phasen an einem oberen Ende des umschlossenen Raums (2) unterhalb der Grenzfläche (10) eingeführt wird, die zwischen der kontinuierlichen Phase (I) und der kontinuierlichen die Phase (II) bildenden Phase gebildet ist, die am Eintritt nach der Koaleszenz dispergiert ist, wobei die Phase (I) an einer Stelle abgezogen wird, die im unteren Teil der Vorrichtung am Umfang des umschlossenen Raums (2) sich befindet, und die Phase (II) an einer Stelle abgezogen wird, die sich im oberen Teil der Vorrichtung am Umfang des umschlossenen Raums (2) oberhalb der Grenzfläche (10) befindet.

27. Verfahren zum Einsatz der Vorrichtung nach einem der Ansprüche 2 bis 21, dadurch gekennzeichnet, daß die dispergierte Phase (II) eine wässrige Phase und die kontinuierliche Phase (I) eine organische Phase ist.

28. Verfahren nach Anspruch 27, dadurch gekennzeichnet, daß das Gemisch der zu trennenden Phasen an einem oberen Ende des umschlossenen Raums (2) eingeführt wird, wobei die am Eintritt dispergierte Phase (II) an einer Stelle abgezogen wird, die sich im unteren Teil des umschlossenen Raums (2) unterhalb der Grenzfläche (10) befindet, wobei die kontinuierliche Phase (I) an einer Stelle abgezogen wird, die sich im unteren Teil des umschlossenen Raums (2) oberhalb der Grenzfläche (10) und benachbart der Achse des umschlossenen Raums (2) befindet.

29. Verfahren zum Einsatz einer Vorrichtung nach einem der Ansprüche 2 bis 21, dadurch gekennzeichnet, daß eine elektrische Potentialdifferenz zwischen den unteren Wandungen und oberen Wandungen dieses Durchlasses erzeugt wird.

30. Verfahren zum Einsatz einer Vorrichtung nach einem der Ansprüche 2 bis 21, dadurch gekennzeichnet, daß das zu trennende Gemisch eine gasförmige Phase, eine organische flüssige Phase, eine flüssige wässrige Phase und Feststoffpartikel umfaßt, wobei die gasförmige Phase an einem oberen Ende des umschlossenen Raums (2), die Feststoffpartikel an einem unteren Ende, die organische Phase und die wässrige Phase an Zwischenstellen entnommen werden.

31. Verfahren nach Anspruch 1, dadurch gekennzeichnet, daß die Drehbewegung eine Zentrifugalbeschleunigung hervorruft, die der kontinuierlichen Phase eine mittlere Geschwindigkeit zwischen 1 und 10 m/s erteilen.

32. Verwendung der Vorrichtung oder des Verfahrens nach einem der Ansprüche 1 bis 31 zu einer Trennung des Gemisches von erdölhaltigen und/oder gashaltigen Fluiden, insbesondere in wässriger Umgebung, an der Oberfläche, zwischen zwei Gewässern oder am Boden des Gewässers.
